# EUROPEAN PATENT APPLICATION

(11) **EP 4 668 695 A2**
(43) Date of publication of application: **24.12.2025**
(21) Application number: 24757038.5
(22) Date of filing: 15.01.2024
(51) Int. Cl.: H04L 43/062, H04L 12/14

(54) **METHOD FOR ANALYZING AND PRESENTING AMOUNT OF USE OF APPLICATION**

(30) Priority: 17.02.2023 KR 20230021457
(71) Applicant: C.G.Tae Technology Co., Inc., Seongnam-si Gyeonggi-do 13595 (KR)
(72) Inventor: TAE, Chulgyu, Seongnam-si Gyeonggi-do 13595 (KR); TAE, Choe, Incheon 21984 (KR)
(74) Representative: Zacco Sweden AB
(86) International application number: PCT/KR2024/000708
(87) International publication number: WO 2024/172307

(57) **Abstract**

An object of the embodiments according to the present invention is to enable reasonable pricing by accurately calculating a user's actual usage of applications, including cloud infrastructure. A method for analyzing and presenting data on usage of an application, comprising steps of: receiving usage analysis data on usage of an analysis target application executed on each of a plurality of user devices affiliated with an institution, from each of the plurality of user devices, wherein the usage analysis data is collected by a usage analysis application executed on each of the plurality of user devices based on a display state of a graphical user interface (GUI) corresponding to an application executed on the user device; generating statistical data on usage of the analysis target application based on the usage analysis data collected from each of the plurality of user devices; and presenting the statistical data to a designated device,

## Description

### TECHNICAL FIELD

The present disclosure relates to a method for analyzing and presenting application usage, and more particularly, to a method for collecting data on application usage by a specific institution or individual, analyzing the collected data, and presenting the analyzed data on a user interface of a designated device.

### BACKGROUND

A cloud service provider (CSP) provides users with cloud infrastructure, and users are able to use desired application services through the cloud infrastructure without directly installing applications on their own user devices.

A cloud managed service provider (MSP), in partnership with a CSP, not only provides the cloud services of the CSP to various users such as companies, public institutions, schools, individuals, etc., optimized for the environment of each organization, but also plays a role in providing maintenance. For example, the MSP may partner with many CSPs and recommend the most suitable combination of services (for example, not only cloud product recommendations provided by each CSP, but also hybrid cloud, multi-cloud, etc.) to specific organizations from among the services provided by the CSP partners.

In the era of cloud computing, some CSPs (for example, Amazon virtual servers) use a pricing method in which cloud infrastructure usage fees are charged for the entire period from the time a user launches the cloud service to the time the service is terminated. However, such a pricing method has a disadvantage for the user in that charges are incurred solely because the service has been launched, even when the user is not actually using the cloud service.

### SUMMARY

### TECHINCL OBJECTS

Accordingly, an object of the present disclosure is to accurately calculate a user's actual usage of applications, including cloud infrastructure, so that reasonable pricing may be achieved.

However, the problems to be solved by the present disclosure are not limited to those mentioned above, and may include other objects that are not mentioned but are clearly understood by those skilled in the art to which the present disclosure pertains from the following description.

### TECHNICAL SOLUTIONS

According to some aspects of the disclosure, a method for analyzing and presenting data on usage of an application, comprising steps of: receiving usage analysis data on usage of an analysis target application executed on each of a plurality of user devices affiliated with an institution, from each of the plurality of user devices, wherein the usage analysis data is collected by a usage analysis application executed on each of the plurality of user devices based on a display state of a graphical user interface (GUI) corresponding to an application executed on the user device; generating statistical data on usage of the analysis target application based on the usage analysis data collected from each of the plurality of user devices; and presenting the statistical data to a designated device, wherein the collecting of, by the usage analysis application, the usage analysis data based on the display state of the graphical user interface (GUI) corresponding to the application executed on the user device comprises: executing the usage analysis application on the user device; initiating, by the usage analysis application, session monitoring for the user device; determining, by the usage analysis application, an analysis target application among a plurality of applications of the user device for which a collection process is to be performed, wherein the determining of the analysis target application includes sequentially determining whether each application currently being executed on the user device is included in a preset monitoring application list; generating the usage analysis data by performing, by the usage analysis application, the collection process for the analysis target application; and transmitting, by the usage analysis application, the usage analysis data to a management server.

According to some aspects, wherein, in the step of presenting the statistical data to the designated device, the statistical data includes at least one of comparison statistical data between analysis target application product groups, comparison statistical data between analysis target applications constituting a specific analysis target application product group, and comparison statistical data between all analysis target applications.

According to some aspects, wherein the step of presenting the statistical data to the designated device comprises: a step of presenting, to the designated device, a user interface for presenting comparison data on the number of user devices that have used, and the number of user devices that have not used, one or more analysis target application product groups executed within the institution during a predetermined period.

According to some aspects, wherein the step of presenting the statistical data to the designated device comprises: a step of presenting, to the designated device, a user interface for presenting comparison data on the number of user devices that have used, and the number of user devices that have not used, each of the applications constituting a specific analysis target application product group executed within the institution during a predetermined period.

According to some aspects, wherein the step of presenting the statistical data to the designated device comprises: a step of presenting, to the designated device, a user interface for presenting comparison data on the number of user devices that have used, and the number of user devices that have not used, each of the applications constituting all analysis target application product group executed within the institution during a predetermined period.

According to some aspects, wherein the step of presenting the statistical data to the designated device comprises: a step of presenting, to the designated device, a user interface for presenting data on a maximum number and a minimum number of user devices that have used one or more analysis target application product groups executed within the institution per day during a predetermined period.

According to some aspects, wherein the step of presenting the statistical data to the designated device comprises: a step of presenting, to the designated device, a user interface for displaying, via a calendar, a daily usage of a preset analysis target application or a preset analysis target application product group within the institution.

According to some aspects, a step of presenting a user interface for adding or removing the analysis target application.

According to some aspects of the disclosure, an apparatus for implementing a method for analyzing and presenting data on the usage of an application, comprising: a processor and a memory including computer-executable instructions, wherein the computer-executable instructions, when executed by the processor, cause the processor to perform operations comprising: receiving usage analysis data on the usage of an analysis target application executed on a user device from each of a plurality of user devices affiliated with an institution, wherein the usage analysis data is collected by a usage analysis application executed on each of the plurality of user devices based on a display state of a graphical user interface (GUI) corresponding to the application executed on the user device; generating statistical data on the usage of the analysis target application based on the usage analysis data collected from each of the plurality of user devices; and presenting the statistical data to a designated device, wherein the collecting of, by the usage analysis application, the usage analysis data based on the display state of the graphical user interface (GUI) corresponding to the application executed on the user device comprises: executing the usage analysis application on the user device; initiating, by the usage analysis application, session monitoring for the user device; determining, by the usage analysis application, an analysis target application among a plurality of applications of the user device for which a collection process is to be performed, wherein the determining of the analysis target application includes sequentially determining whether each application currently being executed on the user device is included in a preset monitoring application list; generating the usage analysis data by performing, by the usage analysis application, the collection process for the analysis target application; and transmitting the usage analysis data to a management server by the usage analysis application.

According to some aspects of the disclosure, a computer-readable recording medium storing computer-executable instructions, wherein the computer-executable instructions, when executed by a processor, cause the processor to perform operations to: receive usage analysis data on the usage of an analysis target application executed on a user device from each of a plurality of user devices affiliated with an institution, wherein the usage analysis data is collected by a usage analysis application executed on each of the plurality of user devices based on a display state of a graphical user interface (GUI) corresponding to the application executed on the user device; generate statistical data on the usage of the analysis target application based on the usage analysis data collected from each of the plurality of user devices; and present the statistical data to a designated device, wherein collecting, by the usage analysis application, the usage analysis data based on the display state of the graphical user interface (GUI) corresponding to the application executed on the user device comprises: executing the usage analysis application on the user device; initiating, by the usage analysis application, session monitoring for the user device; determining, by the usage analysis application, an analysis target application among a plurality of applications executed on the user device for which a collection process is to be performed, wherein the determining of the analysis target application includes sequentially determining whether each application currently being executed on the user device is included in a preset monitoring application list; generating the usage analysis data by performing, by the usage analysis application, the collection process for the analysis target application; and transmitting the usage analysis data to a management server by the usage analysis application.

### ADVANTAGEOUS EFFECTS

According to embodiments of the present disclosure, since the usage of an application is not calculated as the time from execution to termination of the application as in the conventional method, but the actual application usage is analyzed based on the graphical user interface (GUI) of the user device, the software usage status of users such as companies, schools, public institutions, and individuals may be grasped at a glance, and the application usage patterns and habits of an institution or organization may be identified. In addition, based on this, the application usage fee to be paid by an institution may be reasonably calculated according to the actual application usage.

However, the effects achievable by the present disclosure are not limited to those mentioned above. Other effects not explicitly mentioned may also be clearly understood by those skilled in the art to which the present disclosure pertains based on the following description.

### BRIEF DESCRIPTION OF THE DRAWINGS

FIG. 1 is a diagram illustrating an example of a system for analyzing and providing application usage according to an embodiment of the present disclosure.
FIGS. 2 to 7 are exemplary diagrams illustrating a user interface of a usage analysis application according to an embodiment of the present disclosure.
FIG. 8 is a flowchart illustrating a method for presenting data regarding application usage according to an embodiment of the present disclosure.
FIG. 9 is a flowchart illustrating a method of collecting usage analysis data for applications according to an embodiment of the present disclosure.
FIG. 10 is a diagram illustrating a specific example of the collection process performed by the usage analysis application according to an embodiment of the present disclosure.

### DETAILED DESCRIPTION OF EMBODIMENTS

With reference to the drawings attached below, embodiments in which a person having ordinary skill in the art to which the present invention pertains can easily carry out the present invention will be described in detail. However, the present invention can be implemented in various different forms and is not limited to the examples described herein. In addition, in describing the operational principles of the preferred embodiments of the present invention in detail, a detailed description of related well-known functions or configurations will be omitted if it is determined that such description would unnecessarily obscure the gist of the present invention.

Furthermore, the same reference numerals are used for parts that perform similar functions and operations throughout the drawings. In the entire specification, when a specific part is said to be connected to or above/below another part, this includes not only cases where they are directly connected or positioned above/below, but also cases where they are indirectly connected or positioned above/below with another component interposed therebetween.

Moreover, when it is stated throughout the specification that a certain part "comprises" a certain component, this means that unless otherwise specifically stated to the contrary, it does not exclude other components but may further include other components.

Terms such as "first," "second," etc., may be used to describe various components, but such components should not be limited by these terms. That is, the terms are only used for the purpose of distinguishing one component from another. For example, without departing from the scope of the present invention, a first component may be referred to as a second component, and similarly, a second component may be referred to as a first component. The term "and/or" includes a combination of a plurality of related listed items or any of the plurality of related listed items.

In addition, unless otherwise specifically stated, the expression in the singular form as used in the present specification is intended to include one or more entities. Lastly, as used in the present specification, the term "or" means a non-exclusive "or" unless otherwise specifically stated.

Further, the terms used in the present invention have been selected as generally used terms that are currently widely used in consideration of the functions in the present invention; however, they may vary depending on the intent of the person skilled in the art, precedents, or the emergence of new technology. In certain cases, terms arbitrarily selected by the applicant are also included, in which case the meaning will be described in detail in the description portion of the relevant invention. Therefore, the terms used in the present invention should not be interpreted merely as their names, but should be defined based on the meaning of the terms and the overall content of the present invention.

### System for analyzing and providing application usage

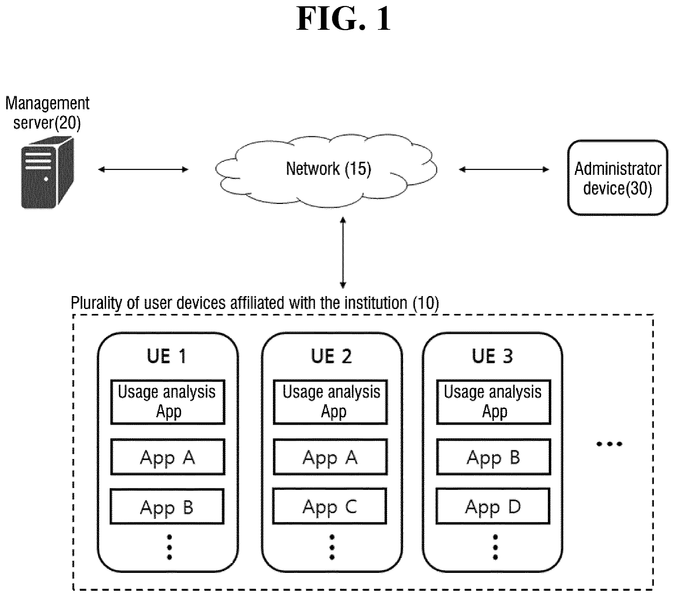

FIG. 1 is a diagram illustrating an example of a system for analyzing and providing application usage according to an embodiment of the present disclosure.

Referring to the system illustrated in FIG. 1, a plurality of user devices 10 affiliated with an institution may be connected to a management server 20 through a network 15. In the example of FIG. 1, only the case in which a single institution is connected to the management server 20 is illustrated, but this is merely for the convenience of explanation. The management server 20 may receive and store application usage analysis data for a plurality of institutions and may generate statistical data therefrom. An administrator may manage applications for a plurality of institutions through the management server 20 and/or an administrator device 30.

Meanwhile, in some cases, the plurality of user devices 10 may be connected to an institution server not shown operated by various institutions such as companies, schools, public institutions, research institutes, etc., and the institution server not shown may serve to manage the plurality of user devices 10 and data within the institution.

According to an embodiment of the present disclosure, a usage analysis application, usage analysis application (usage analysis App), may be executed on each of the plurality of user devices 10 affiliated with the institution. The usage analysis application may be installed on the user device, or may be executed on the user device by external resources in a cloud form. The usage analysis application may collect usage analysis data for at least one application, among the applications App A, B, C, D, and the like executed on individual user devices UE1, UE2, UE3, and the like, which is determined as an analysis target application.

According to an embodiment of the present disclosure, a plurality of applications App A, B, C, D, and the like may be executed on user devices UE1, UE2, UE3, and the like of officers, employees, or members of each institution. Here, the plurality of applications executed on a user device may include not only applications for which installation files are installed on the user device, but also applications provided in a cloud form to be executable on the user device.

The analysis target application may be one of the plurality of applications executed on each of the plurality of user devices affiliated with the institution, which is determined by the usage analysis application to be analyzed for usage. The analysis target application may be an application designated by an administrator through the management server 20 or the administrator device 30, or an application determined as a target for analysis by the usage analysis application among the monitoring target applications that may be added or removed. According to an embodiment, such determination may be made based on whether a specific application is currently running, whether it is a monitoring target application, and whether it has a graphical user interface, GUI. This will be described in more detail later.

According to an embodiment, the plurality of applications executed on a user device may be classified according to respective application product groups or categories, for example, Adobe product group, MS Office product group, web browser product group, statistical program product group, Hancom product group, other product groups, etc. In addition, a plurality of applications may be included within each application product group. For example, the MS Office product group may include a plurality of applications such as Excel, OneDrive, OneNote, PowerPoint, and the like. By classifying the plurality of applications executed on the user device according to application product groups as described above, not only usage analysis data for individual applications but also usage analysis data for each application product group may be collected by the usage analysis application.

The user device 10 and the administrator device 30 may be any devices having a display capable of presenting the graphical user interface of applications, such as personal computers (PCs), laptops, tablets, mobile phones, wearable devices, and the like, and may be devices capable of being connected to the management server 20.

The network 15 may be a wired or wireless network, and the user device 10 may be connected to the network 15 through a wired LAN cable, or may be connected to wireless Internet and the like at a location where a wireless access point, AP, is installed through Wi-Fi, 3G/4G/5G data networks, or may be connected to the network 15 by transmitting and receiving wireless signals with peripheral devices wirelessly, and the specific connection method is not limited thereto.

According to an embodiment of the present disclosure, the management server 20 may be a server for providing, servicing, and managing the usage analysis application. The usage analysis application may have the same or different versions executed on the plurality of user devices 10 affiliated with the institution and on the management server 20 or the administrator device 30. In addition, the management server 20 may provide, service, and manage at least some of the plurality of applications executed on the user device 10.

The management server 20 may also receive usage analysis data regarding the usage of the analysis target application executed on each of the user devices UE1, UE2, UE3, and the like, from the usage analysis application, usage analysis App, executed on each of the plurality of user devices 10 affiliated with the institution. The usage analysis data may be collected by the usage analysis application, usage analysis App, based on the graphical user interface GUI of the individual user devices UE1, UE2, UE3, and the like.

The usage analysis data received by the management server 20 may be processed by the management server 20 to generate statistical data. Since the usage analysis data is in a raw state, it may be processed and treated in various ways to generate meaningful statistical data. The statistical data generated in this way may be presented on the user interface of the display of the management server 20.

The usage analysis data and the statistical data according to an embodiment of the present disclosure are based on the measurement of actual application usage of a user through the screen of the user device, that is, a graphical user interface, GUI, and as a non-limiting example, may be used to provide a user interface for presenting data on the number of user devices that used and did not use one or more monitoring target application product groups executed within an institution during a predetermined period, or to provide a user interface for presenting data on the number of user devices that used and did not use each specific application within one or more monitoring target application product groups executed within an institution during a predetermined period, or to provide a user interface in which, for each individual date displayed on a calendar interface, the monitoring target application product groups used and the number of user devices that used the corresponding product groups are displayed.

Through this, the application usage patterns and habits of an institution may be identified based on the actual application usage of users of the user devices affiliated with the institution, and accordingly, not only may the types and number of applications to be used in the user devices of the institution be appropriately and effectively managed, but also a significant effect may be achieved in that the application usage fee to be paid by the institution may be reasonably calculated according to the application usage.

### User interface of the usage analysis application for an application

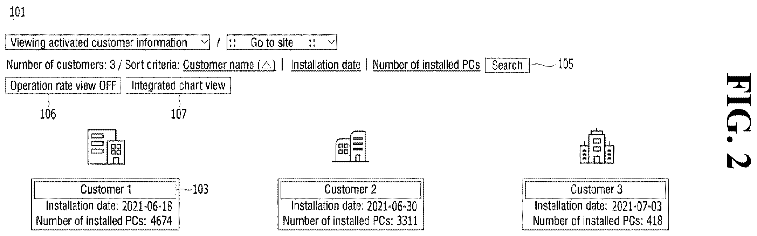

FIGS. 2 to 7 are exemplary diagrams illustrating a user interface of a usage analysis application according to an embodiment of the present disclosure.

Referring to FIG. 2, when the usage analysis application is executed on the management server 20 and the administrator completes a login or authentication procedure, a user interface 101 for selecting a customer, that is, an institution, may be presented. The user interface 101 for selecting an institution customer may include one or more customer information display parts 103 indicating the name, installation date, and number of installation devices (or number of installation PCs) for one or more institution customers. In the example of FIG. 2, three customer information display parts 103 are presented for institution customers such as a customer whose name is "Customer 1", installation date is "2022-06-18", and number of installation PCs is "4674 units", but the number of customer information display parts 103 in the user interface 101 may vary depending on the actual number of institution customers.

The user interface 101 may further include sort buttons 105 for sorting the customer information display parts 103 according to each of customer name, installation date, and number of installation PCs. In addition, the user interface 101 may include an operation rate view selection button 106 for displaying the operation rate of each customer's application, for example, the operation rate of a specific application product group, as preset levels, and an integrated chart view button 107 for displaying the operation rate of a specific application product group in the form of a chart. For example, in the case of the operation rate view selection button 106, when the operation rate of the MS Office product group for Customer 1 is 58.9%, the MS Office product group may be displayed as level 3, and when the operation rate of the Adobe product group is 18.9%, the Adobe product group may be displayed as level 1, by classifying the operation rates into preset levels. In addition, in the case of the integrated chart view button 107, the operation rate may be visualized and displayed, for example, by representing the operation rates of the MS Office product group for each of Customer 1 to Customer 3 in the form of a bar graph in a chart.

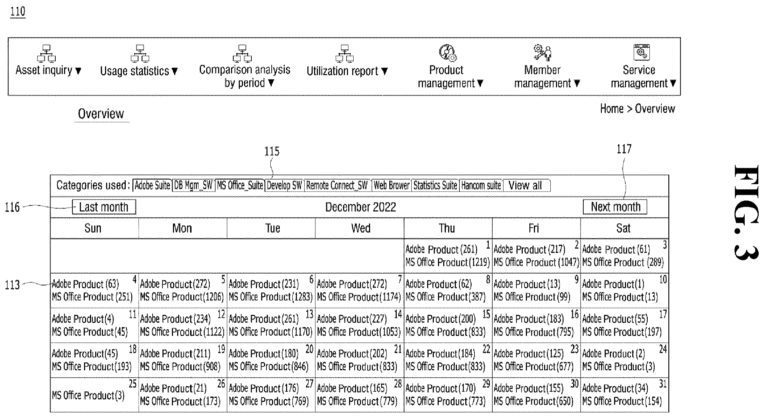

Referring to FIG. 3, when the administrator selects a specific institution customer from the user interface 101 of FIG. 2, a user interface 110 may be presented that displays, through a calendar, the usage by date of applications or product groups preset as targets for analysis in the institution. In such a user interface 110, for each date, the analysis target application product groups used and the number of user devices 113 that used the corresponding product groups may be displayed. For example, on the date corresponding to December 4, 2022 in FIG. 2, "Adobe products (63); MS Office products (251)" may be displayed, indicating that, in the case of the corresponding customer, 63 user devices within the customer used the Adobe product group and 251 user devices within the customer used the MS Office product group. In addition, the top of the calendar may include a plurality of tabs 115 for selecting monitoring target application product groups (categories) to be displayed on the calendar. The calendar may further include a previous month button 116 and a next month button 117, so that, according to the administrator's selection, not only the daily application usage for the current month, but also the daily application usage for other months may be identified at a glance.

Referring to FIG. 3, when the administrator hovers a mouse cursor or another pointer over the items such as "Asset Inquiry", "Usage Statistics", "Period Comparison Analysis", "Usage Report", "Product Management", "Member Management", and "System Management" located at the top of the user interface 110, or clicks on a specific item, sub-items for each of the items are unfolded to be selectable, and the administrator may select a desired sub-item among the unfolded sub-items. These items located at the top of the user interface 110 may be configured to remain displayed even when the user interface is switched.

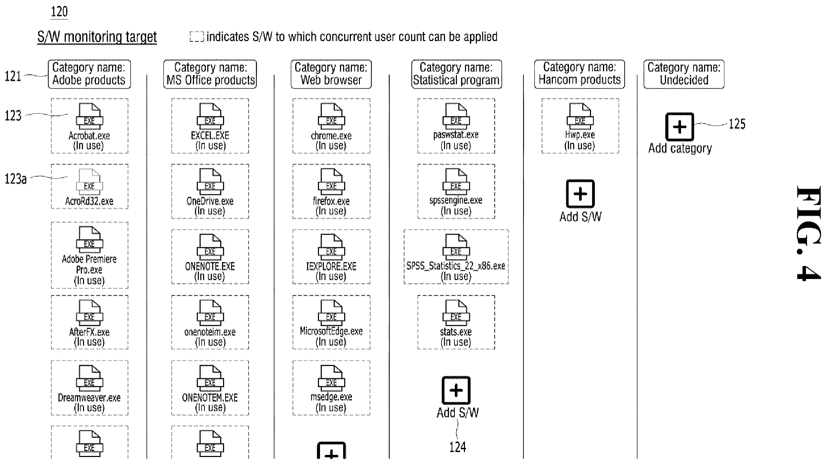

FIG. 4 is a user interface 120 that is displayed when the administrator selects "S/W Monitoring Targets", which is a sub-item of the "Asset Inquiry" item among the items at the top of the user interface 110 of FIG. 3. As shown in FIG. 4, one or more monitoring target applications 123 may be set, classified by application product group 121. The administrator may add or remove monitoring target applications 123, classified by application product group 121. For example, when the administrator wants to add a monitoring target application 123 to a specific application product group 121, the administrator may select a software add button 124 and add a desired application. In addition, when the administrator wants to deselect a monitoring target application 123 that has already been designated, the corresponding monitoring target application may be selected through a mouse click or the like, and may be excluded from the monitoring targets while being displayed in a dimmed manner as indicated by reference numeral 123a. In addition, when the administrator wants to add an application product group 121, the administrator may select a category add button 125 and add a desired application product group.

According to an embodiment of the present disclosure, a user interface is provided that displays the monitoring target applications that are subject to software monitoring targets in a way that allows them to be identified at a glance, and through such a user interface, since the monitoring target applications can be freely added and deleted, the usage analysis of applications may be flexibly performed.

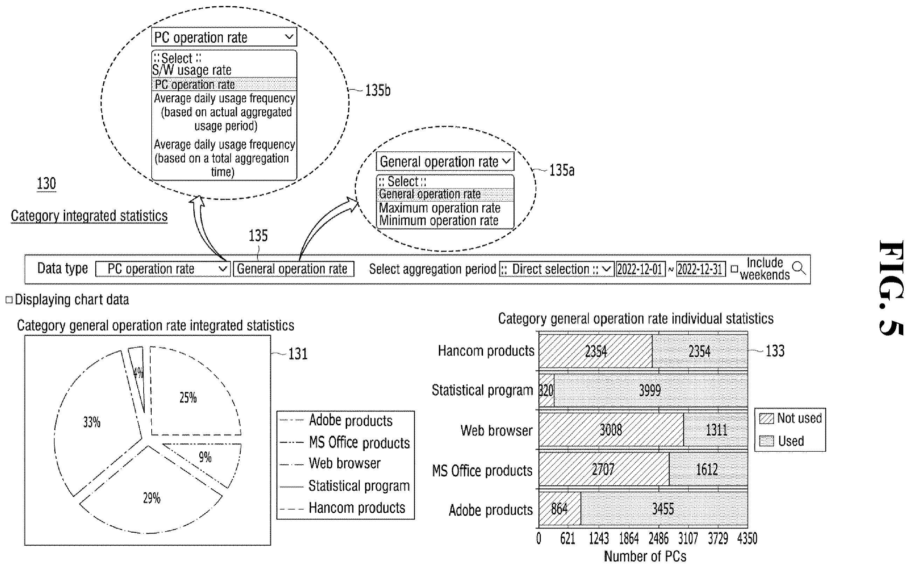

FIG. 5 is a user interface 130 that is displayed when the administrator selects "Category Integrated Statistics", which is a sub-item of the "Usage Statistics" item among the items at the top of the user interface 110 of FIG. 3. As shown in FIG. 5, when the administrator selects the data type as "PC Operation Rate" or "General Operation Rate" through the data type selection field 135, the user interface 130 for category integrated statistics may present, on one side, the integrated statistics of general operation rates for the monitoring target application product groups (Category General Operation Rate Integrated Statistics) 131, and on the other side, the individual statistics of general operation rates for the monitoring target application product groups (Category General Operation Rate Individual Statistics) 133. Here, the general operation rate is based on the number of user devices (e.g., PCs) that used a specific application product group at least once during a predetermined period. For example, when a specific user device has used the MS Office product group at least once during a week, the corresponding user device is counted, and in this manner, such counting is performed for the user devices in the institution, and the general operation rate is calculated.

The general operation rate integrated statistics 131 of the monitoring target application product groups (or analysis target application product groups) is configured to allow the general operation rates of a plurality of monitoring target application product groups to be visually viewed on a chart by comparing them with one another. For example, in the example of FIG. 5, it can be seen from the general operation rate integrated statistics 131 of the monitoring target application product groups that the general operation rates of the Adobe product group and the MS Office product group account for 29% and 9%, respectively, of the total operation rate.

The general operation rate individual statistics 133 of the monitoring target application product groups is for visually displaying, for each of a plurality of monitoring target application product groups, a comparison between the number of user devices (e.g., PCs) that were used at least once during a predetermined period and the number of user devices that were not used. For example, in the example of FIG. 5, in the case of the Adobe product group, it can be seen that the number of user devices categorized as "used" in which the general operation rate is measured is 3455, whereas the number of "unused" user devices is 864, and in the case of the MS Office product group, the number of "used" user devices is 1612, whereas the number of "unused" user devices is 2707.

Meanwhile, the selection of the data type may be performed through a first drop-down box 135b and a second drop-down box 135a that are displayed when the data type selection field 135 is clicked, and the administrator may be provided, through the user interface, with statistics for various data types through the data type selection field 135. According to an embodiment, the first drop-down box 135b allows the administrator to select software usage rate, PC operation rate, average daily usage frequency (based on actual aggregated usage period), and average daily usage frequency (based on a total aggregation time), and the second drop-down box 135a allows the selection of sub-data types corresponding to the data type selected through the first drop-down box 135b. For example, as illustrated in FIG. 5, when "PC Operation Rate" is selected through the first drop-down box 135b, the second drop-down box 135a allows the administrator to select "General Operation Rate", "Maximum Operation Rate", and "Minimum Operation Rate" as sub-data types.

According to an embodiment, when the administrator selects "PC Operation Rate" and "Maximum Operation Rate" as the data types through the data type selection field 135, statistical data on the maximum number of user devices that used the monitoring target application product groups per day during a predetermined period, that is, maximum operation rate integrated statistics and maximum operation rate individual statistics, may be presented on the user interface.

In addition, when the administrator selects "PC Operation Rate" and "Minimum Operation Rate" as the data types through the data type selection field 135, statistical data on the minimum number of user devices that used the monitoring target application product groups per day during a predetermined period, that is, minimum operation rate integrated statistics and minimum operation rate individual statistics, may be presented on the user interface.

Meanwhile, when the administrator selects "Software Usage Rate" as the data type through the data type selection field 135, statistical data on the number of usage days based on the number of user devices that used the monitoring target application product groups at least once during a predetermined period, that is, category software usage rate integrated statistics and category software usage rate individual statistics, may be presented on the user interface.

In addition, when the administrator selects "Average Daily Usage Frequency" as the data type through the data type selection field 135, statistical data on the average number of user devices that used the monitoring target application product groups per day, that is, category average daily usage frequency integrated statistics and category average daily usage frequency individual statistics, may be presented on the user interface.

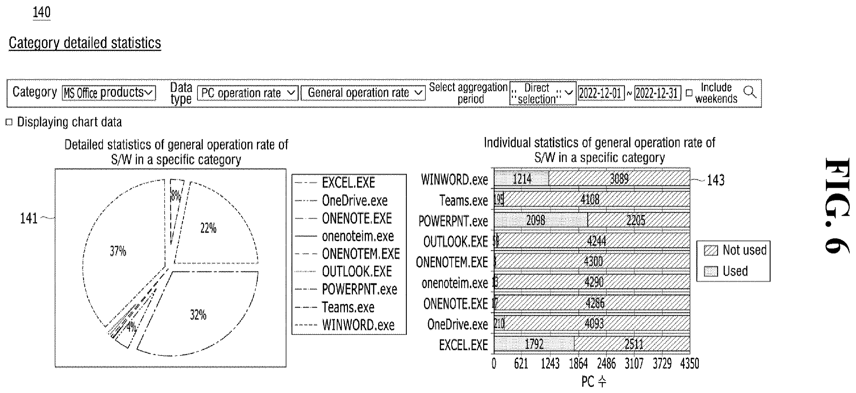

FIG. 6 is a user interface 140 that is displayed when the administrator selects "Category Detailed Statistics", which is a sub-item of the "Usage Statistics" item among the items at the top of the user interface 110 of FIG. 3. As shown in FIG. 6, when "PC Operation Rate" and "General Operation Rate" are selected in the data type selection field in the user interface 140 for category detailed statistics, general operation rate detailed statistics 141 for each monitoring target application within a specific monitoring target application product group (i.e., software general operation rate detailed statistics within a specific category) may be presented on one side, and general operation rate individual statistics 143 for each monitoring target application within the specific monitoring target application product group (i.e., software general operation rate individual statistics within a specific category) may be presented on the other side.

Here, the general operation rate is based on the number of user devices (e.g., PCs) that used a specific monitoring target application at least once during a predetermined period. The general operation rate detailed statistics 141 for each monitoring target application within a specific monitoring target application product group (i.e., software general operation rate detailed statistics within a specific category) is for visually displaying, in the form of a chart, a comparison between the general operation rates of a plurality of monitoring target applications within the product group. For example, in the example of FIG. 6, monitoring target applications such as Excel (EXCEL.EXE), OneDrive (OneDrive.exe), OneNote (ONENOTE.EXE), Outlook (OUTLOOK.EXE), PowerPoint (POWERPNT.exe), etc. may be included in the MS Office product group (category), and the general operation rate for each monitoring target application may be visually displayed and compared with each other on a chart. It can be seen from the detailed statistics 141 that the general operation rates of Excel and PowerPoint account for 32% and 37%, respectively, of the total operation rate

The general operation rate individual statistics 143 for each monitoring target application within a specific monitoring target application product group (i.e., software general operation rate individual statistics within a specific category) is for visually displaying, for each monitoring target application within the product group, a comparison between the number of user devices (e.g., PCs) that were used at least once during a predetermined period and the number of user devices that were not used. For example, in the example of FIG. 6, it can be seen that, in the case of the Excel application, the number of "used" user devices in which the general operation rate is measured is 1792, whereas the number of "unused" user devices is 2511, and in the case of the PowerPoint application, the number of "used" user devices is 2098, whereas the number of "unused" user devices is 2205.

Meanwhile, as described above with reference to FIG. 5, when the administrator selects, through the data type selection field, a data type such as "PC Operation Rate / Maximum Operation Rate", "PC Operation Rate / Minimum Operation Rate", "Software Usage Rate", or "Average Daily Usage Frequency", instead of "PC Operation Rate / General Operation Rate", corresponding statistical data may be presented on the user interface 140.

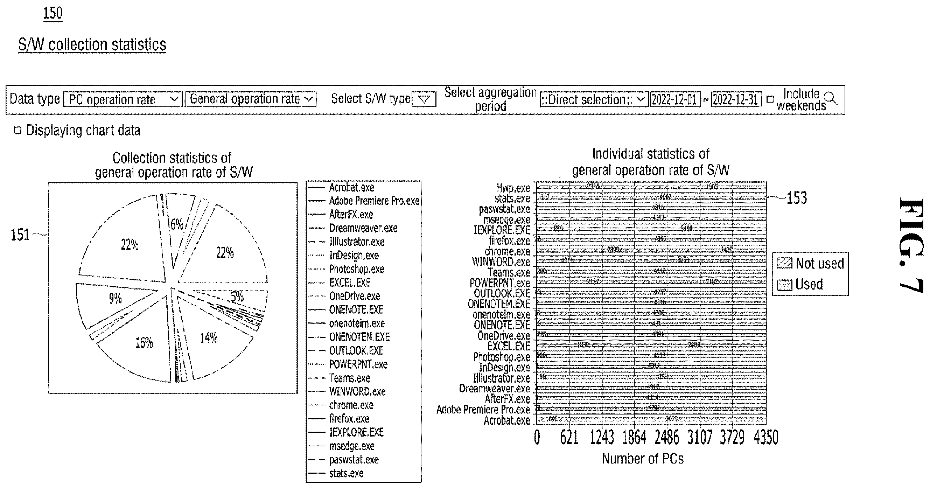

FIG. 7 is a user interface 150 that is displayed when the administrator selects "S/W Collection Statistics", which is a sub-item of the "Usage Statistics" item among the items at the top of the user interface 110 of FIG. 3. As illustrated in FIG. 7, in the user interface 150 for software collection statistics, general operation rate collection statistics (S/W general operation rate collection statistics) 151 for each of all the monitoring target applications may be presented on one side, and general operation rate individual statistics (S/W general operation rate individual statistics) 153 for each of all the monitoring target applications may be presented on the other side.

Here, the general operation rate is based on the number of user devices (e.g., PCs) that used a specific monitoring target application at least once during a predetermined period. The general operation rate collection statistics (software general operation rate collection statistics) 151 for each of all the monitoring target applications is for visually displaying, in the form of a chart, a comparison between the general operation rates of all the monitoring target applications. For example, in the example of FIG. 7, all monitoring target applications such as Excel (EXCEL.EXE), Acrobat (Acrobat.exe), Photoshop (Photoshop.exe), Chrome (chrome.exe), etc., regardless of product group, may be included, and the general operation rate for each monitoring target application may be visually displayed and compared with each other on a chart. For instance, it can be seen from the collection statistics 151 that the general operation rates of the Acrobat and Chrome applications account for 9% and 5%, respectively, of the total operation rate.

The general operation rate individual statistics for each of all monitoring target applications (S/W General Operation Rate Individual Statistics) 153 is for visually displaying, for each of all monitoring target applications, a comparison between the number of user devices (e.g., PCs) that were used at least once during a predetermined period and the number of user devices that were not used. For example, in the example of FIG. 7, it can be seen that, in the case of the Acrobat application, the number of "used" user devices in which the general operation rate is measured is 3679, whereas the number of "unused" user devices is 640, and in the case of the Chrome application, the number of "used" user devices is 2899, whereas the number of "unused" user devices is 1420.

Meanwhile, as described above with reference to FIG. 5, when the administrator selects, through the data type selection field, a data type such as "PC Operation Rate / Maximum Operation Rate", "PC Operation Rate / Minimum Operation Rate", "Software Usage Rate", or "Average Daily Usage Frequency", instead of "PC Operation Rate / General Operation Rate", corresponding statistical data may be presented on the user interface 150.

As such, according to the user interface of the usage analysis application of an embodiment of the present disclosure, not only comparison statistics by product group, comparison statistics by application within a product group, and comparison statistics by all applications can be presented, but also more systematic statistical information can be provided by introducing concepts such as general operation rate, minimum/maximum operation rate, etc. Accordingly, the administrator can identify the actual application usage of each customer (institution) based on the actual application usage of each user device. Through this, the application usage patterns and habits of an institution may be identified based on the actual application usage of users of the user devices affiliated with the institution, and accordingly, not only may the types and number of applications to be used in the user devices of the institution be appropriately and effectively managed, but also a significant effect may be achieved in that the application usage fee to be paid by the institution may be reasonably calculated according to the application usage.

### Method for presenting data regarding application usage

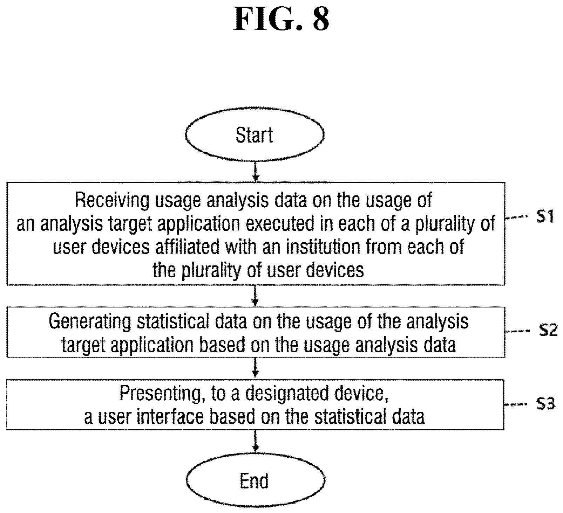

FIG. 8 is a flowchart illustrating a method for presenting data regarding application usage according to an embodiment of the present disclosure.

Referring to FIG. 8, in step S1, usage analysis data regarding the usage of an analysis target application executed on a user device may be received from each of a plurality of user devices affiliated with an institution. The usage analysis data may be data collected based on a graphical user interface (GUI) of the user device by a usage analysis application executed on each of the plurality of user devices.

In step S2, statistical data regarding the usage of the analysis target application may be generated based on the usage analysis data collected from each of the plurality of user devices.

The statistical data may include at least one of comparison statistical data between analysis target application product groups, comparison statistical data between analysis target applications constituting a specific analysis target application product group, and comparison statistical data between all analysis target applications.

In step S3, a user interface based on the statistical data may be presented on a designated device. The designated device may be a management server located inside the institution or in the cloud.

According to an embodiment, the user interface based on the statistical data may include a user interface for presenting comparison data regarding the number of user devices that used and the number of user devices that did not use one or more analysis target application product groups executed within the institution during a predetermined period.

According to an embodiment, the user interface based on the statistical data may include a user interface for presenting comparison data regarding the number of user devices that used and the number of user devices that did not use each of the applications constituting a specific analysis target application product group executed within the institution during a predetermined period.

According to an embodiment, the user interface based on the statistical data may include a user interface for presenting comparison data regarding the number of user devices that used and the number of user devices that did not use each of the applications constituting all of the analysis target application product groups executed within the institution during a predetermined period.

According to an embodiment, the user interface based on the statistical data may include a user interface for presenting data regarding a maximum number and a minimum number of user devices that used one or more analysis target application product groups executed within the institution on a daily basis during a predetermined period.

According to an embodiment, the user interface based on the statistical data may include a user interface for displaying, through a calendar, daily usage of a preset analysis target application or analysis target application product group within the institution.

### Method of collecting usage analysis data for applications

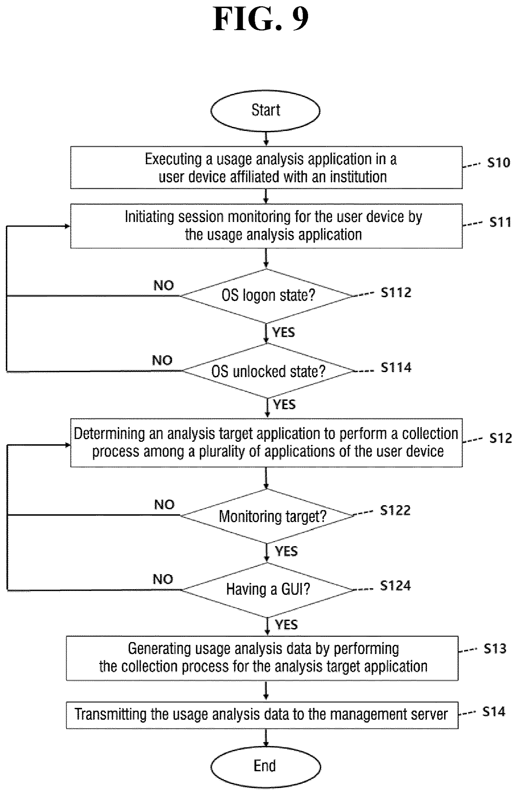

FIG. 9 is a flowchart illustrating a method of collecting usage analysis data for applications according to an embodiment of the present disclosure.

Referring to FIG. 9, in step S10, a usage analysis application may be executed in a user device affiliated with an institution. The usage analysis application executed in a user device affiliated with the institution may not have a separate user interface and may operate in the background. Alternatively, the usage analysis application may allow checking, through a simple user interface, whether the usage analysis application is currently running in the background. Such a usage analysis application may be configured by default to automatically execute whenever the user device is turned on, once it is installed.

In step S11, session monitoring for the user device may be initiated by the usage analysis application. Such session monitoring corresponds to a process of determining whether to initiate a data collection process in which the usage analysis application collects data on the usage of a plurality of applications of the user device.

According to an embodiment, when the session monitoring by the usage analysis application is initiated, it may be determined whether the user is in a logon state in the operating system (OS) (step S112), and if it is determined that the user is in a logon state in the OS, it may be further determined whether the OS is in an unlocked state (step S114). Here, the OS logon state refers to a state in which the user must enter a preconfigured password in the OS or perform an operation such as a click in order to enter a normal operation state of the OS (that is, a state in which applications can be used on the OS). In addition, the OS being in a locked state may refer to a state in which, for example, when the user device is a laptop, after the user has logged on, the user does not use the laptop for a predetermined period of time or closes the laptop cover (including the display part), and must perform an operation such as re-login or a click to return the OS to a normal operation state. If the OS is not in a logon state or is in a locked state, the OS is not in a normal operation state, and thus, even though the OS of the user device is running, there is no need to perform usage analysis, so the process may not proceed to a step of collecting usage analysis data.

In step S12, if the OS is in a logon state and is not in a locked state, the usage analysis application may determine, among a plurality of applications of the user device, an analysis target application for which to perform a data collection process to collect usage analysis data.

According to a non-limiting example, the determination of the analysis target application may include a step S122 of sequentially determining, for each application (i.e., process) currently running on the user device, whether it is included in a preset list of monitoring applications, and a step S124 of determining whether the application has a graphical user interface (GUI). Step S122 is for determining whether the currently running application is a monitoring target, and step S124 is for determining whether the application has a graphical user interface so as to confirm whether it is actually available for work by the user. That is, among the monitoring target applications, those having a GUI may be determined as analysis target applications.

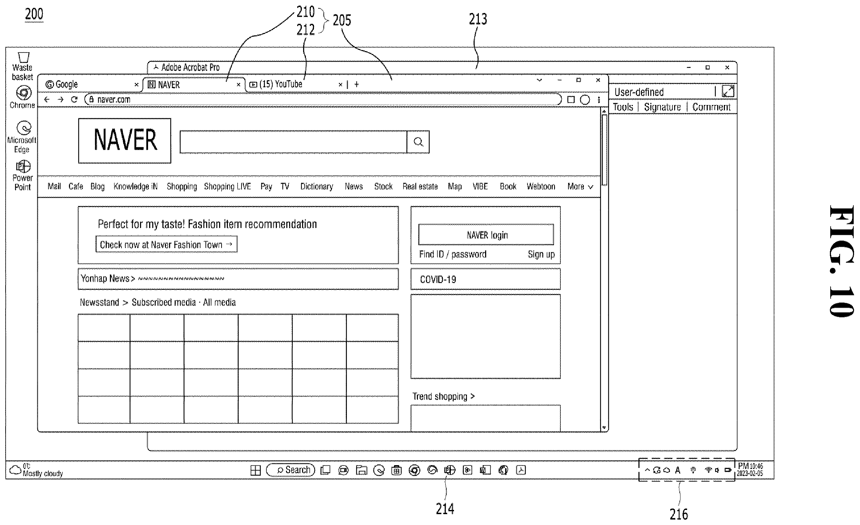

In step S13, the user analysis application may perform a collection process for the analysis target application determined in step S12 to generate usage analysis data. The collection process may include a procedure of determining whether the user has actually performed work on the application, based on the status of the graphical user interface corresponding to the application. Such determination may be performed based on a preset time interval or rule. This will be described in more detail below with reference to FIG. 10.

In step S14, the usage analysis data including the result of performing the collection process may be transmitted to a management server. According to an embodiment, such usage analysis data may be converted into an XML format and transmitted to the management server, although the format of the transmitted data is not limited thereto.

FIG. 10 is a diagram illustrating a specific example of the collection process performed by the usage analysis application according to an embodiment of the present disclosure.

Referring to FIG. 10, as described above, in the collection process, the usage analysis application analyzes the usage of each of the plurality of analysis target applications 205, 213, 214, and 216 based on the status of the graphical user interface (GUI) of each application.

According to an embodiment of the present disclosure, the usage analysis application may assign different state identifiers (e.g., GUI_ON or GUI_OFF) depending on whether the graphical user interface (GUI) of each application is displayed on the screen of the user device, and may assign different state identifiers (e.g., Focus_ON or Focus_OFF) depending on whether the interface, even if displayed on the screen, is arranged in the foreground. Further, even when a specific application includes a plurality of tabs, usage may be analyzed based on assigning different state identifiers (e.g., Focus_ON or Focus_OFF) by distinguishing between the currently foreground tab and the other tabs among the plurality of tabs.

For convenience of explanation, a specific example of FIG. 10 is described, in which the user is actually using the Chrome web browser application 205 on the screen 200 of their user device. According to an embodiment, since the graphical user interface of the Chrome web browser application 205 is displayed in the foreground, a state identifier GUI_ON may be assigned to indicate that the graphical user interface (GUI) is activated.

In the example of FIG. 10, a plurality of tabs exist in the Chrome web browser application 205, and a detailed state identifier of Focus_ON may be assigned to a tab 210 that is currently displayed in the foreground within the graphical user interface of the Chrome web browser application 205, and a detailed state identifier of Focus_OFF may be assigned to a tab 212 that is not displayed in the foreground. This is based on the assumption that the user is currently focusing on and performing work with respect to the tab displayed in the foreground.

In addition, in the example of FIG. 10, it can be seen that a graphical user interface (i.e., window) corresponding to the Acrobat application 213 of Adobe, other than the Chrome web browser 205, is displayed in the background with respect to the Chrome web browser application 205 displayed in the foreground on the screen of the user device. Accordingly, in an embodiment of the present disclosure, for an application such as the Acrobat application 213 displayed in the background of the screen, GUI_ON may be assigned since the GUI is displayed on the screen, but Focus_OFF may be assigned on the assumption that the user is not currently performing work.

Further, in the example of FIG. 10, in the case of an application 214 that has been executed as an analysis target application but is in a state hidden in the Windows taskbar such that the GUI is not displayed, the usage analysis application may assign GUI_OFF. Likewise, in the case of an application 216 that is executed as a startup program or the like and is included in the Windows taskbar as a tray icon but with which the user is not performing work, the usage analysis application may assign GUI_OFF.

Meanwhile, even when the user is not displaying a GUI on the screen at the current time, there may be a situation in which the user is using the application in parallel with other applications for work. Accordingly, the usage analysis application may determine whether a particular application is actually being used based on periodically checking the graphical user interface (GUI) of each application, or on the duration of GUI_ON and/or Focus_ON, the interval of state changes, etc. That is, the usage analysis application may analyze the usage of the application by checking the state of the graphical user interface of each application at predetermined time intervals or according to predetermined rules.

As such, according to the usage analysis data collection method for an application according to an embodiment of the present disclosure, when the operating system is operating normally, the usage analysis application may perform a collection process for a monitoring target, that is, an analysis target application, which has a user interface (UI) that the user can actually use, and in particular, since such a collection process performs usage analysis based on the state of the graphical user interface corresponding to the analysis target application, it has a remarkable effect of providing more accurate and practical usage analysis data compared to the conventional usage analysis method based merely on whether the application is executed.

### Computer-readable recording medium

The fact that each step or operation of the method according to the embodiments of the present disclosure may be performed by a computer including one or more processors by executing a computer program stored in a computer-readable recording medium is apparent.

The computer-executable instructions stored in the aforementioned recording medium may be implemented through a computer program programmed to perform the corresponding steps, and such a computer program may be stored in a computer-readable recording medium and executed by a processor. The computer-readable recording medium may be a non-transitory readable medium. In this case, the non-transitory readable medium refers to a medium that semi-permanently stores data and is readable by a device, rather than a medium that stores data for a short moment, such as a register, cache, memory, or the like. Specifically, programs for performing the various methods described above may be stored and provided in non-transitory readable media such as semiconductor memory devices, such as erasable programmable read only memory (EPROM), electrically erasable programmable read only memory (EEPROM), and flash memory devices; magnetic disks such as internal hard disks and removable disks; optical-magnetic disks; and non-volatile memory including CD-ROM and DVD-ROM disks.

The methods according to various examples disclosed in this document may be provided as part of a computer program product. The computer program product may be distributed in the form of a storage medium readable by a device (e.g., a compact disc read only memory (CD-ROM)), or online through an application store (e.g., the Play Store^{™}). In the case of online distribution, at least a portion of the computer program product may be at least temporarily stored in, or temporarily generated in, a storage medium such as the memory of a manufacturer's server, an application store server, or a relay server.

As described above, those skilled in the art to which the present invention pertains will understand that the present invention can be embodied in other specific forms without changing its technical spirit or essential characteristics. Therefore, the above-described embodiments should be understood in all respects as illustrative and not restrictive. The scope of the present invention is indicated by the claims set forth below rather than by the foregoing detailed description, and all changes or modifications derived from the meaning and scope of the claims and the equivalent concepts are to be construed as being included within the scope of the present invention.

The features and advantages described in the present specification do not encompass all of them, and in particular, many additional features and advantages will be apparent to those skilled in the art upon consideration of the drawings, the specification, and the claims. Moreover, it should be noted that the language used in this specification was chosen primarily for readability and instructional purposes, and may not have been selected to describe or limit the subject matter of the present invention.

The foregoing description of the embodiments of the present invention has been presented for purposes of illustration. It is not intended to limit the invention to the precise forms disclosed, nor to exclude the inclusion of other elements. Those skilled in the art will understand that many modifications and variations are possible in light of the above disclosure.

Accordingly, the scope of the present invention is not limited by the detailed description, but rather is limited by any claims of the application based on this description. Therefore, the disclosure of the embodiments of the present invention is illustrative and does not limit the scope of the present invention as set forth in the following claims.

## Claims

1. A method for analyzing and presenting data on usage of an application, comprising steps of:
receiving usage analysis data on usage of an analysis target application executed on each of a plurality of user devices affiliated with an institution, from each of the plurality of user devices, wherein the usage analysis data is collected by a usage analysis application executed on each of the plurality of user devices based on a display state of a graphical user interface (GUI) corresponding to an application executed on the user device;
generating statistical data on usage of the analysis target application based on the usage analysis data collected from each of the plurality of user devices; and
presenting the statistical data to a designated device,
wherein the collecting of, by the usage analysis application, the usage analysis data based on the display state of the graphical user interface (GUI) corresponding to the application executed on the user device comprises:
executing the usage analysis application on the user device;
initiating, by the usage analysis application, session monitoring for the user device;
determining, by the usage analysis application, an analysis target application among a plurality of applications of the user device for which a collection process is to be performed, wherein the determining of the analysis target application includes sequentially determining whether each application currently being executed on the user device is included in a preset monitoring application list;
generating the usage analysis data by performing, by the usage analysis application, the collection process for the analysis target application; and
transmitting, by the usage analysis application, the usage analysis data to a management server.

2. The method for analyzing and presenting data on usage of an application according to claim 1,
wherein, in the step of presenting the statistical data to the designated device,
the statistical data includes at least one of comparison statistical data between analysis target application product groups, comparison statistical data between analysis target applications constituting a specific analysis target application product group, and comparison statistical data between all analysis target applications.

3. The method for analyzing and presenting data on usage of an application according to claim 1,
wherein the step of presenting the statistical data to the designated device comprises:
a step of presenting, to the designated device, a user interface for presenting comparison data on the number of user devices that have used, and the number of user devices that have not used, one or more analysis target application product groups executed within the institution during a predetermined period.

4. The method for analyzing and presenting data on usage of an application according to claim 1,
wherein the step of presenting the statistical data to the designated device comprises:
a step of presenting, to the designated device, a user interface for presenting comparison data on the number of user devices that have used, and the number of user devices that have not used, each of the applications constituting a specific analysis target application product group executed within the institution during a predetermined period.

5. The method for analyzing and presenting data on usage of an application according to claim 1,
wherein the step of presenting the statistical data to the designated device comprises:
a step of presenting, to the designated device, a user interface for presenting comparison data on the number of user devices that have used, and the number of user devices that have not used, each of the applications constituting all analysis target application product group executed within the institution during a predetermined period.

6. The method for analyzing and presenting data on usage of an application according to claim 1,
wherein the step of presenting the statistical data to the designated device comprises:
a step of presenting, to the designated device, a user interface for presenting data on a maximum number and a minimum number of user devices that have used one or more analysis target application product groups executed within the institution per day during a predetermined period.

7. The method for analyzing and presenting data on usage of an application according to claim 1,
wherein the step of presenting the statistical data to the designated device comprises:
a step of presenting, to the designated device, a user interface for displaying, via a calendar, a daily usage of a preset analysis target application or a preset analysis target application product group within the institution.

8. The method for analyzing and presenting data on usage of an application according to claim 1, further comprising :
a step of presenting a user interface for adding or removing the analysis target application.

9. An apparatus for implementing a method for analyzing and presenting data on the usage of an application, comprising:
a processor and a memory including computer-executable instructions,
wherein the computer-executable instructions, when executed by the processor, cause the processor to perform operations comprising:
receiving usage analysis data on the usage of an analysis target application executed on a user device from each of a plurality of user devices affiliated with an institution, wherein the usage analysis data is collected by a usage analysis application executed on each of the plurality of user devices based on a display state of a graphical user interface (GUI) corresponding to the application executed on the user device;
generating statistical data on the usage of the analysis target application based on the usage analysis data collected from each of the plurality of user devices; and
presenting the statistical data to a designated device,
wherein the collecting of, by the usage analysis application, the usage analysis data based on the display state of the graphical user interface (GUI) corresponding to the application executed on the user device comprises:
executing the usage analysis application on the user device;
initiating, by the usage analysis application, session monitoring for the user device;
determining, by the usage analysis application, an analysis target application among a plurality of applications of the user device for which a collection process is to be performed, wherein the determining of the analysis target application includes sequentially determining whether each application currently being executed on the user device is included in a preset monitoring application list;
generating the usage analysis data by performing, by the usage analysis application, the collection process for the analysis target application; and
transmitting the usage analysis data to a management server by the usage analysis application.

10. A computer-readable recording medium storing computer-executable instructions,
wherein the computer-executable instructions, when executed by a processor, cause the processor to perform operations to:
receive usage analysis data on the usage of an analysis target application executed on a user device from each of a plurality of user devices affiliated with an institution, wherein the usage analysis data is collected by a usage analysis application executed on each of the plurality of user devices based on a display state of a graphical user interface (GUI) corresponding to the application executed on the user device;
generate statistical data on the usage of the analysis target application based on the usage analysis data collected from each of the plurality of user devices; and
present the statistical data to a designated device,
wherein collecting, by the usage analysis application, the usage analysis data based on the display state of the graphical user interface (GUI) corresponding to the application executed on the user device comprises:
executing the usage analysis application on the user device;
initiating, by the usage analysis application, session monitoring for the user device;
determining, by the usage analysis application, an analysis target application among a plurality of applications executed on the user device for which a collection process is to be performed, wherein the determining of the analysis target application includes sequentially determining whether each application currently being executed on the user device is included in a preset monitoring application list;
generating the usage analysis data by performing, by the usage analysis application, the collection process for the analysis target application; and
transmitting the usage analysis data to a management server by the usage analysis application.
